# DEMANDE DE BREVET EUROPEEN

(11) **EP 2 246 902 A1**
(43) Date de publication de la demande: **03.11.2010**
(21) Numéro de dépôt: 09159201.4
(22) Date de dépôt: 30.04.2009
(51) Int. Cl.: H01L 31/048

(54) **Couverture de toiture comprenant une membrane d'étanchéité recouverte de cellules solaires en film mince**

(71) Demandeur: Piront, Vincent, 4890 Thimister-Clermont (BE)
(72) Inventeur: Piront, Vincent, 4890 Thimister-Clermont (BE)
(74) Mandataire: pronovem

(57) **Abrégé**

La présente invention se rapporte à un système de couverture de toiture comprenant :
- une membrane d'étanchéité souple (10) posée en bandes jointives à joints plats en lisière et fixées sur un support sous-jacent (2A, 2B, 2C, 1, 4, 5, 6) ;
- une pluralité de profilés ou barres (3), d'une seule pièce en section transverse, fixés à intervalle régulier sur ladite membrane d'étanchéité (10) de manière à former un ensemble rigide ;
**caractérisé en ce que** la membrane d'étanchéité (10) comporte au moins sur une partie de sa surface extérieure une pluralité de cellules semi-conductrices photovoltaïques se présentant sous forme d'un film mince à monojonction ou hétérojonction.

## Description

### Objet de l'invention

La présente invention se rapporte au domaine technique de la pose de couvertures d'étanchéité dans le secteur du bâtiment (industriel, résidentiel, bureaux, etc.). Elle concerne en particulier une couverture de toiture fonctionnelle, capable de produire de l'énergie électrique.

### Etat de la technique

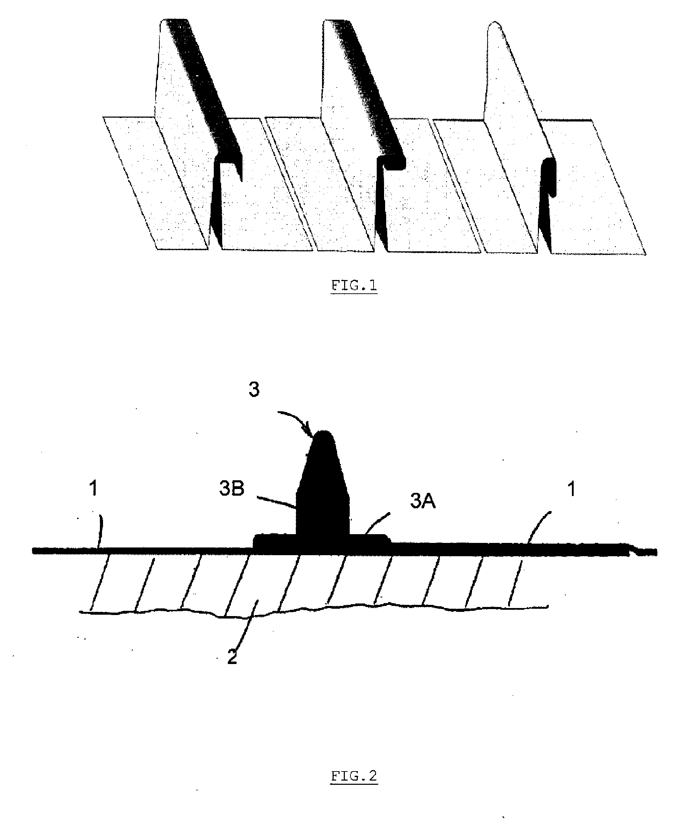

On connaît la couverture de toiture traditionnelle à joints debout, réalisée généralement en longues bandes de métal noble comme le zinc ou le cuivre, ou encore en tôles ou bardages métalliques (acier, aluminium, etc.). Ces bandes comportent des pattes longitudinales qui sont prises dans le joint debout qui est doublement serti, ce qui assure l'étanchéité (figure 1).

Ce type de couverture est particulièrement esthétique, durable et s'adapte facilement à la forme architecturale du bâtiment. Par exemple, il peut épouser la forme circulaire d'une toiture par un gironnage (découpe en triangle ou trapèze des bandes métalliques).

En contrepartie, la couverture traditionnelle est coûteuse de par un certain nombre de facteurs tels que le prix actuellement élevé des métaux, les opérations nécessaires de découpe et pliage, la nécessité de poser préalablement un voligeage sous-jacent en bois, etc. De plus, ces couvertures se dilatent et supportent mal les écarts extrêmes de température et nécessitent une ventilation pour retarder leur vieillissement.

Pour remédier à ces inconvénients, le Demandeur a proposé un système de couverture très simple faisant intervenir une membrane d'étanchéité 1 en matière synthétique, par exemple en PVC, tendue sur un support de toiture sous-jacent 2 (voir brevet EP 0 964 968 B1, figure 2). Sur cette membrane sont fixés des profilés 3 (semelle 3A, âme 3B) qui restaurent le caractère esthétique de la couverture traditionnelle en zinc ou cuivre, tout en offrant un certain nombre de fonctions techniques comme par exemple :
- grâce à une disposition parallèle des profilés entre eux, dans le sens de la pente, assurer un guidage optimal de l'écoulement des eaux, surtout dans le cas des pentes faibles ;
- cacher les zones de jonction présentant des fixations perforantes éventuelles, entre deux lés de membrane adjacents et assurer l'étanchéité de la couverture ;
- subdiviser mécaniquement les surfaces de membranes exposées au vent et par la-même améliorer l'ancrage de la couverture.
De plus, s'ils sont réalisés dans la même matière thermoplastique que les membranes, les profilés peuvent être fixés à celles-ci par soudage à froid par solvant, collage et également soudage à (l'air) chaud, ce qui permet d'éviter les problèmes de condensation par réalisation d'une toiture chaude.

Enfin, l'exécution de la couverture est plus facile et plus rapide dans le cas des couvertures en zinc à joints debout, surtout pour les toitures de formes compliquées où le gain de temps de pose est appréciable.

Par ailleurs, actuellement, des efforts considérables sont entrepris pour favoriser les formes d'énergie renouvelables en vue de réduire drastiquement l'utilisation de combustible fossile et les émissions à effet de serre, ou encore de produire de l'électricité « verte ». Dans le secteur du bâtiment industriel mais aussi de bureaux et résidentiel, de nombreuses solutions sont proposées en vue de tirer parti de l'énergie solaire disponible qui peut notamment être captée au niveau des grandes surfaces de toiture des bâtiments.

En particulier, le domaine photovoltaïque a connu un certain développement et une certaine évolution. Actuellement la recherche évolue vers des produits semiconducteurs du type film mince polycristallin, déposés sur des surfaces souples, qui devraient montrer un rendement supérieur et s'avérer beaucoup moins chers que les panneaux rigides de première génération utilisant des wafers monocristallins de silicium. De plus, l'engouement pour la technologie photovoltaïque menace constamment de pénurie l'approvisionnement en ces derniers. Des études de marché récentes chiffrent à près de 25% la part de marché du film mince photovoltaïque. Celle-ci pourrait même s'élever à 50% en 2015.

Ainsi, par ordre croissant de rendement dans la technologie en film mince, on a vu apparaître successivement des panneaux souples recouverts de silicium amorphe (a-Si), de tellure de cadmium (CdTe), de siléniure de cuivre-indium (CIS) et de disiléniure de cuivre-indium-gallium (CIGS - CuInₓGa₍₁₋ₓ₎Se₂). Ce dernier recouvrement serait le plus prometteur avec un rendement de l'ordre de 20%. Les cellules de CIGS sont généralement fabriquées par technologie sous vide par co-évaporation sur un substrat chauffé ou co-évaporation/co-sputtering. Toutefois, une technologie de fabrication alternative et très compétitive en termes de coût a été développée et se présente sous la forme d'une impression d'un substrat flexible sur rotative au moyen d'une encre contenant des nanoparticules de CIGS (« Solarzellen - einfach gedruckt », Bild der Wissenschaft (Scientific American) 2, 2007 ; US 7,306,823 B2).

Le document WO 2009/011790 A2 propose un système photovoltaïque de couverture de toiture comprenant un élément de substrat, un module photovoltaïque disposé sur cet élément de substrat et un onduleur pour convertir en courant alternatif le courant continu produit par le module photovoltaïque. Selon une forme d'exécution particulière, le système peut comporter des éléments actifs comprenant un ou plusieurs modules photovoltaïques, pouvant être configurés en forme de shingles pour donner l'aspect d'un revêtement de toiture ainsi que des éléments inactifs ayant également l'aspect d'un revêtement de toiture. Le substrat peut se présenter sous forme d'un rouleau ou d'un ruban et le module photovoltaïque est flexible et comporte des cellules photovoltaïques disposées en couche mince (matériau semi-conducteur à homojonction p-n ou hétérojonction).

Le document US 2004/0173255 A1 propose une méthode de fixation en toiture de bandes souples porteuses de cellules photovoltaïques, où deux bandes adjacentes sont fixées longitudinalement par des agrafes à leurs lisières non actives, en formant un joint relevé en triangle. Les joints sont protégés par l'agrafage ultérieur d'une latte de forme courbe qui épouse la forme de joint en triangle et qui assure la fonction d'étanchéité. Un système similaire à joints de lisère relevé et agrafage est proposé par le document WO 93/14525 A1.

Dans le document WO 02/073704 A1, les joints de lisière entre deux bandes sont plats et fixés au support sous-jacent par une bande longitudinale sur laquelle est agrafée une latte courbe de protection.

### Buts de l'invention

La présente invention vise à fournir, dans le domaine de la couverture de toiture, une solution qui offre au moins une fonction additionnelle de production d'énergie sous forme d'électricité en plus de la fonction primaire d'étanchéité et qui permette, lors de la pose, de prendre en charge de manière simple et peu coûteuse les contraintes techniques accrues de par la présence du matériau photovoltaïque.

L'invention a plus particulièrement pour but de fournir une couverture de toiture multifonctionnelle qui optimise l'écoulement des eaux et par conséquent la longévité du matériau photovoltaïque.

L'invention a encore pour but de fournir une couverture de toiture multifonctionnelle qui offre une rigidité et tenue au vent suffisantes.

L'invention vise également à fournir une couverture de toiture multifonctionnelle ayant un aspect esthétique ou architectural similaire à celui des couvertures de toitures traditionnelles en zinc ou cuivre à joints debout ou des couvertures en tôles et bardages métalliques (acier ou autres).

### Principaux éléments caractéristiques de l'invention

La présente invention se rapporte à un système de couverture de toiture comprenant :
- une membrane d'étanchéité souple posée en bandes jointives à joints plats en lisière et fixées sur un support sous-jacent ;
- une pluralité de profilés ou barres, d'une seule pièce en section transverse, fixés à intervalle régulier sur ladite membrane d'étanchéité de manière à former un ensemble rigide ;
   **caractérisé en ce que** la membrane d'étanchéité comporte au moins sur une partie de sa surface extérieure une pluralité de cellules semi-conductrices photovoltaïques se présentant sous forme d'un film mince à monojonction ou hétérojonction.

Selon des modes d'exécution préférés de l'invention, le système de couverture de toiture ci-dessus comprend en outre, en combinaison, une ou plusieurs des caractéristiques suivantes :
- les profilés sont également recouverts, au moins sur une partie de leur surface exposée après fixation, desdites cellules semi-conductrices photovoltaïques se présentant sous forme d'un film mince ;
- la membrane d'étanchéité souple (10) est une membrane synthétique ;
- la membrane synthétique est sélectionnée parmi le groupe constitué des membranes en copolymère d'éthylène, de propylène et de diène-monomère vulcanisé (EPDM), copolymère d'isoprène et d'isobutylène vulcanisé (IIR Butil), polychloroprène vulcanisé (CR), polyéthylène chlorosulfoné partiellement vulcanisé (CSPE), caoutchouc nitrile vulcanisé (NBR), épichlorhydrine (ECH), élastomère thermoplastique vulcanisé (TPV), polyoléfine thermoplastique (TPO), interpolymère éthylène (EIP), polymère butadiène nitrile (NBP), polymère de chlorure de polyvinyle (PVC) avec plastifiant, polymère non vulcanisé de polyisobutylène (PIB), copolymère d'acétate de vinyle et d'éthylène non vulcanisé (EVA), copolymère d'acétate de polyvinyle et d'éthylène non vulcanisé et bitume (ECB) et polymère de polyéthylène chloré non vulcanisé et exempt de plastifiant (CPE) ;
- la membrane comporte un tissé, une armature ou une couche de dos incorporé, à des fins de renfort ou pour améliorer l'adhérence d'une colle utilisée ;
- la matière du tissé, de l'armature ou de la couche de dos incorporé est sélectionné dans le groupe constitué du polyester, du polyamide et du voile de verre ;
- la membrane d'étanchéité souple (10) est une membrane bitumeuse ;
- la membrane bitumeuse comporte au moins une couche et est améliorée par addition de polypropylène atactique (APP) ou de styrène-butadiène-styrène (SBS) ;
- la membrane bitumeuse comporte une armature sous forme d'un voile de verre ou de polyester ou sous forme d'une feuille d'aluminium ;
- la membrane d'étanchéité souple comprend dans sa composition des composés sélectionnés parmi le groupe constitué des plastifiants, des pigments, des biocides, des retardateurs de flamme, des absorbants UV et des antioxydants ;
- la matière semi-conductrice des cellules photovoltaïques en film mince est sélectionnée parmi le groupe constitué du silicium amorphe, du silicium nanocristallin, avec ou sans addition de SiGe, du CdTe, du CdS, du GaAs, du CuInSe₂ (CIS) et du CuInₓGa₍₁₋ₓ₎Se₂ (CIGS) ;
- le film mince semi-conducteur a été réalisé sur la membrane par projection sous vide ou par impression au moyen d'un rouleau d'une encre contenant des nanoparticules de semi-conducteur ;
- le support sous-jacent sur lequel est fixée la membrane recouverte de cellules photovoltaïques est sélectionné dans le groupe constitué d'un isolant, d'un support en béton, d'une tôle ou d'un bac métallique, d'une autre membrane d'étanchéité, d'une structure et/ou d'un panneau ou voligeage en bois naturel ou reconstitué et d'un assemblage quelconque de ces éléments ;
- la membrane recouverte de cellules photovoltaïques est séparée du support sous-jacent par un géotextile d'interposition ;
- le support sous-jacent est muni de moyens de ventilation des cellules photovoltaïques ;
- le film mince de cellules semi-conductrices photovoltaïques déposé sur la membrane d'étanchéité est recouvert d'une couche de protection vis-à-vis des intempéries ;
- les profilés sont fixés à la membrane par collage, soudage à froid, soudage à l'air chaud ou mécaniquement ;
- chaque profilé d'une seule pièce en section transverse est formé d'une semelle et d'une âme saillante surmontée d'une partie ayant une section transverse de forme essentiellement triangulaire, carrée, ronde, cylindrique ou en flèche.

L'invention concerne également un bâtiment présentant un système de couverture de toiture selon l'une quelconque des revendications précédentes.

### Brève description des figures

La figure 1, mentionnée ci-dessus, représente, selon une vue en coupe, les étapes de réalisation des joints debout sertis dans le cas des toitures métalliques traditionnelles (source : documentation Ugine & ALZ Arcelor).

La figure 2, mentionnée ci-dessus, représente, selon une vue en coupe, une couverture de toiture avec membrane d'étanchéité synthétique à joints plats et profilés collés ou soudés à l'air chaud, selon l'état de la technique.

Les figures 3 à 7 représentent, selon une vue en coupe, des exemples de modes d'exécution de l'invention particulièrement adaptés à une couverture de toiture existante.

### Description de formes d'exécution préférées de l'invention

La présente invention propose un système de couverture pour toiture comprenant une membrane d'étanchéité souple destinée à être tendue et fixée sur une structure sous-jacente de la toiture, et sur laquelle sont fixés de manière régulière des profilés ou barres rigides, réalisés ou non dans la même matière que la membrane d'étanchéité.

Selon l'invention, les profilés sont avantageusement réalisés d'une seule pièce en section transverse.

La membrane d'étanchéité souple sera de préférence une membrane qui résiste bien au vieillissement causé par le rayonnement solaire, ainsi qu'aux sollicitations mécaniques, thermiques et aux produits chimiques.

La membrane d'étanchéité souple peut être une membrane synthétique, généralement sous forme monocouche.

Les membranes synthétiques peuvent être de trois types :
- les élastomères synthétiques (thermodurcissables) ;
- les élastomères thermoplastiques ;
- les plastomères.

Parmi les élastomères thermodurcissables, on trouve notamment le copolymère d'éthylène, de propylène et de diène-monomère vulcanisé (EPDM), actuellement le plus utilisé des hauts-polymères élastomères, surtout aux U.S.A., le copolymère d'isoprène et d'isobutylène vulcanisé (IIR Butil), le polychloroprène vulcanisé (CR) ou Néoprène^{®}, le polyéthylène chlorosulfoné partiellement vulcanisé (CSPE), le caoutchouc nitrile vulcanisé (NBR), l'épichlorhydrine (ECH).

Parmi les élastomères thermoplastiques, on trouve notamment l'élastomère thermoplastique vulcanisé (TPV) composé d'un assemblage de polymères élastomères et plastomères vulcanisés, la polyoléfine thermoplastique (TPO) composée de copolymères de polypropylène sans plastifiant, l'interpolymère éthylène (EIP), composé de PVC et de stabilisants interpolymères éthylène, le polymère butadiène nitrile (NBP), composé de PVC et de copolymères butadiène-acrylonitrile.

Parmi les plastomères, on trouve le polymère de chlorure de polyvinyle (PVC) avec plastifiant, le polymère non vulcanisé de polyisobutylène (PIB), le copolymère d'acétate de vinyle et d'éthylène non vulcanisé (EVA), le copolymère d'acétate de polyvinyle et d'éthylène non vulcanisé et bitume (ECB), le polymère de polyéthylène chloré non vulcanisé et exempt de plastifiant (CPE).

Les membranes synthétiques peuvent éventuellement présenter un tissé, une armature ou une couche de dos incorporé, par exemple en polyester, polyamide, voile de verre, etc., à des fins de renfort ou pour améliorer l'adhérence de la colle.

Les membranes synthétiques peuvent être, selon le cas, fixées mécaniquement, posées en adhérence totale ou partielle ou encore en pose libre lestée. L'adhérence au support est obtenue par collage à chaud, au moyen de bitume, ou à froid (colle de contact). La jonction des lés peut souvent se faire à l'air chaud ou en utilisant un solvant.

La membrane peut également être une membrane bitumeuse, constituée d'une armature enrobée de bitume. Dans ce cas, la membrane peut être monocouche ou multicouches. Le bitume peut être amélioré par addition de polymères, qui peuvent être notamment de deux types : les plastomères (APP pour polypropylène atactique) qui confèrent des propriétés plastiques au bitume et les élastomères (SBS pour styrène-butadiène-styrène) qui confèrent des propriétés élastiques au bitume. Les sous-couches éventuelles sont à base de bitume soufflé. L'armature du bitume peut être sous forme d'un voile de verre ou de polyester ou encore sous forme d'une feuille d'aluminium.

Les membranes d'étanchéité souples selon l'invention peuvent également comprendre, outre leur composition de base et sans que cette liste soit exhaustive, des plastifiants, des pigments, des fongicides et algicides, des retardateurs de flamme, des absorbants UV ou des antioxydants.

Selon l'invention, la surface extérieure de la membrane, c'est-à-dire la surface qui sera exposée à la lumière du jour, une fois posée en toiture, est recouverte en totalité ou en partie de cellules solaires photovoltaïques semi-conductrices obtenues par la technologie de dépôt en film mince, monojonction ou multijonction. Une cellule à multijonction est réalisée en empilant plusieurs cellules, généralement deux ou trois, l'une sur l'autre. La matière semi-conductrice utilisée dans ces cellules peut comprendre par exemple :
- du silicium amorphe, nanocristallin (ou microcristallin), avec ou sans addition de SiGe ;
- un semi-conducteur II-VI tel que CdTe ou CdS,
- un semi-conducteur III-V tel que GaAs et/ou encore
- un semi-conducteur I-III-VI tel que CuInSe₂ (CIS) ou CuInₓGa₍₁₋ₓ₎Se₂ (CIGS).

Des cellules photovoltaïques organiques peuvent également être utilisées dans le cadre de la présente invention, comme par exemple des cellules polymères fabriquées à partir de mélanges de deux polymères conjugués ou d'un polymère conjugué avec un sensibilisateur moléculaire (PPV pour Poly(p-phénylène vinylène), polyfluorène ou polythiophène). Cependant, à l'heure actuelle, le rendement de ces cellules est nettement inférieur à celui des cellules inorganiques, telles qu'énumérées ci-dessus.

La réalisation préalable du film mince sur la membrane peut par exemple comprendre la projection sous vide ou l'impression d'une encre contenant des nanoparticules de semi-conducteur.

La semelle de chaque profilé est fixée sur la membrane d'étanchéité par un procédé quelconque, par exemple par soudage à l'air chaud, soudage à froid par solvant ou collage.

Dans une forme d'exécution préférée, chaque profilé est formé avec une semelle et une âme saillante, éventuellement terminée dans sa partie la plus extérieure par une section à profil de forme générale triangulaire, carrée, ronde, en flèche, etc., présentant le cas échéant un faîte arrondi. Le profilé peut encore avantageusement avoir une forme cylindrique. Toujours selon l'invention, la surface exposée du profilé est avantageusement recouverte, en tout ou en partie des mêmes cellules photovoltaïques semi-conductrices réalisées en film mince que celles recouvrant la membrane précitée.

Un grand choix de supports sous-jacents de couverture de toiture est compatible avec l'invention.

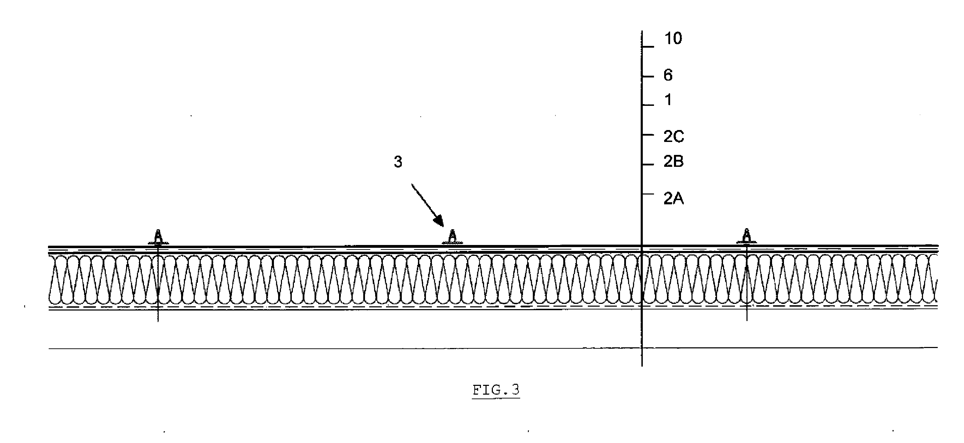

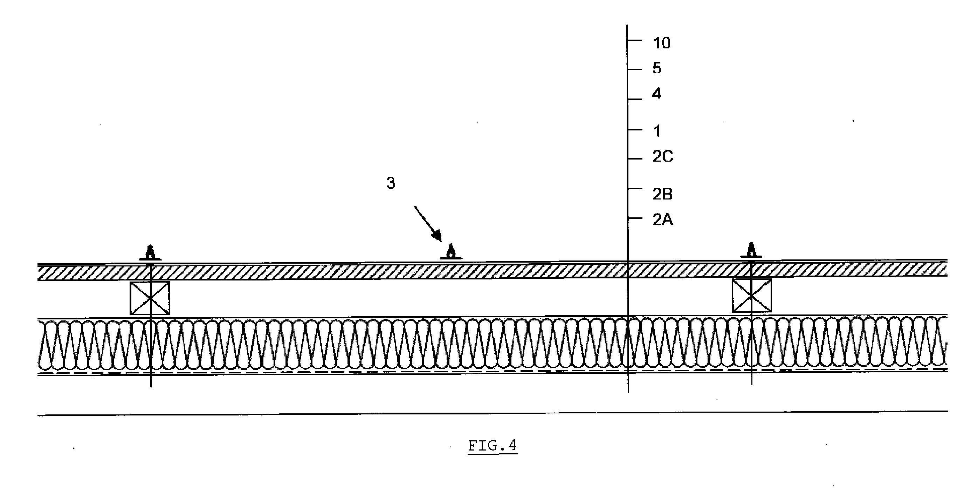

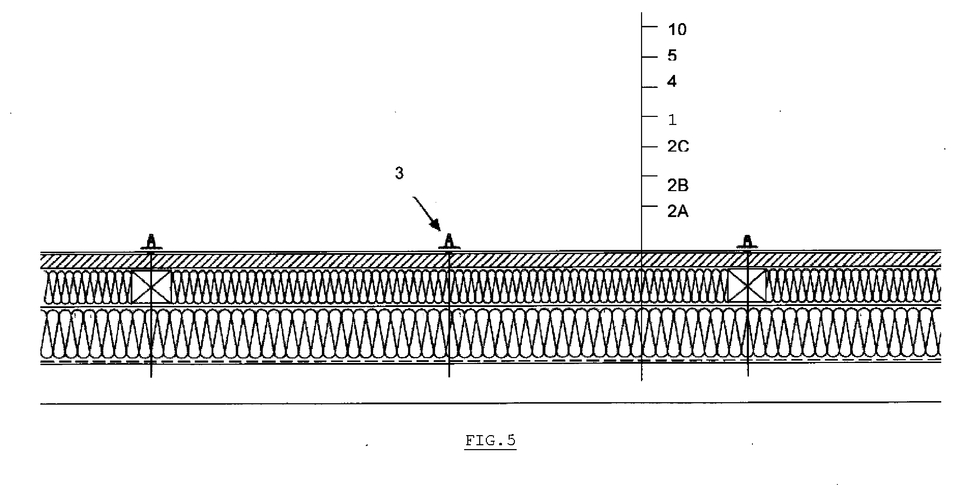

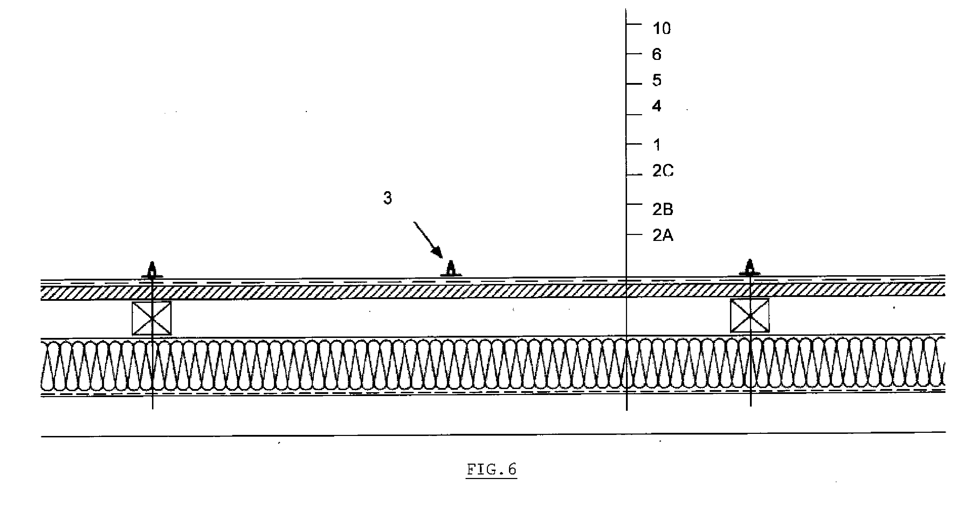

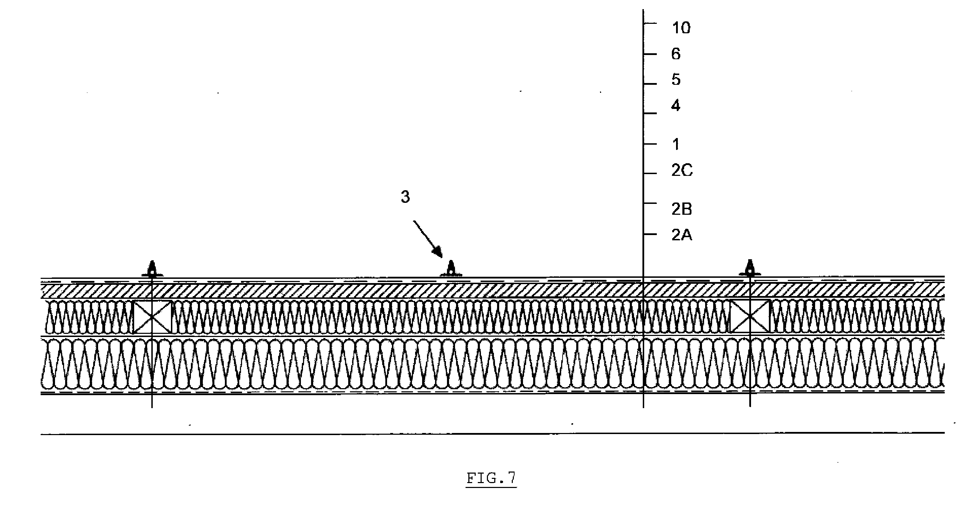

Ainsi, selon un exemple de forme d'exécution de l'invention, sur la surface d'un élément d'une toiture, par exemple un isolant, un voligeage, un support en béton, un panneau en bois, aggloméré, contreplaqué, multiplex, OSB, etc., une tôle, etc., ou une combinaison de plusieurs de ces éléments, on fixe, par un moyen mécanique quelconque (vis, clous, colle, etc.) une membrane d'étanchéité homogène constituée de feuilles par exemple en PVC, recouvertes de cellules photovoltaïques en film mince comme précisé ci-dessus. La figure 3 montre un exemple de réalisation adaptée à une toiture existante, comprenant, disposés en couches successives, un support de toiture sous forme d'un bac d'acier 2A, un pare-vapeur existant 2B, un isolant existant 2C, une membrane d'étanchéité existante 1, un géotextile d'interposition 6 et enfin une membrane recouverte de cellules photovoltaïques en film mince 10. La figure 4 montre un exemple de réalisation similaire à celui de la figure 3, où le géotextile d'interposition 6 est remplacé par une structure en bois 4 recouverte de panneaux ou voliges en bois 5. La figure 5 montre un assemblage similaire à celui de la figure 4, où un isolant supplémentaire est inséré dans la structure en bois 4. La figure 6 montre un assemblage similaire à celui de la figure 4, où un géotextile d'interposition 6 a été inséré entre les panneaux de bois 5 et la membrane photovoltaïque 10. La figure 7 montre un assemblage similaire à celui de la figure 5, où un géotextile d'interposition 6 a été inséré entre les panneaux de bois 5 et la membrane photovoltaïque 10.

Sur cette membrane 10 sont mis en place (collés) des profilés 3 d'une pièce en matière synthétique, par exemple des profilés souples en PVC, disposés parallèlement les uns aux autres, selon la plus grande pente de la toiture, avec un écartement régulier entre eux. Les profilés sont fixés sur la membrane par soudure, par exemple par soudure à froid ou collage à l'aide de tétrahydrofurane, par soudure à l'air chaud ou encore fixés mécaniquement.

Avantageusement, on choisira des profilés de hauteur limitée et espacés de manière à rendre négligeable leur ombre portée sur la surface de cellules photovoltaïques situées en surface de la membrane d'étanchéité.

Les profilés peuvent être fixés sur la zone de chevauchement de deux lés de PVC consécutifs, ce qui a pour effet de rendre les joints invisibles. L'apparence d'une couverture de toiture ainsi réalisée de façon simple et rapide, est similaire à celle d'une couverture de toiture en zinc ou cuivre traditionnelle.

Un autre avantage de l'invention est de présenter une fonction de capteur photovoltaïque en toiture très discrète, voire qui ne peut être distinguée par les passants par rapport à une toiture ne présentant pas cette fonction.

Toujours avantageusement, la disposition des profilés parallèles entre eux sera choisie de manière à optimiser l'écoulement des eaux et donc à augmenter la longévité de la membrane et surtout de son recouvrement semi-conducteur. La solution préconisée se distingue par sa simplicité en regard des solutions de pose de bandes souples photovoltaïques selon l'état de la technique, qui au contraire utilisent des systèmes d'agrafage complexes.

La présente invention est applicable quelle que soit la pente de toiture entre 0 et 90 degrés, les deux cas extrêmes étant la toiture horizontale et le bardage vertical.

## Revendications

1. Système de couverture de toiture comprenant :
- une membrane d'étanchéité souple (10) posée en bandes jointives à joints plats en lisière et fixées sur un support sous-jacent (2A, 2B, 2C, 1, 4, 5, 6) ;
- une pluralité de profilés ou barres (3), d'une seule pièce en section transverse, fixés à intervalle régulier sur ladite membrane d'étanchéité (10) de manière à former un ensemble rigide ;
**caractérisé en ce que** la membrane d'étanchéité (10) comporte au moins sur une partie de sa surface extérieure une pluralité de cellules semi-conductrices photovoltaïques se présentant sous forme d'un film mince à monojonction ou hétérojonction.

2. Système selon la revendication 1, **caractérisé en ce que** les profilés (3) sont également recouverts, au moins sur une partie de leur surface exposée après fixation, desdites cellules semi-conductrices photovoltaïques se présentant sous forme d'un film mince.

3. Système selon la revendication 1, **caractérisé en ce que** la membrane d'étanchéité souple (10) est une membrane synthétique.

4. Système selon la revendication 3, **caractérisé en ce que** la membrane synthétique est sélectionnée parmi le groupe constitué des membranes en copolymère d'éthylène, de propylène et de diène-monomère vulcanisé (EPDM), copolymère d'isoprène et d'isobutylène vulcanisé (IIR Butil), polychloroprène vulcanisé (CR), polyéthylène chlorosulfoné partiellement vulcanisé (CSPE), caoutchouc nitrile vulcanisé (NBR), épichlorhydrine (ECH), élastomère thermoplastique vulcanisé (TPV), polyoléfine thermoplastique (TPO), interpolymère éthylène (EIP), polymère butadiène nitrile (NBP), polymère de chlorure de polyvinyle (PVC) avec plastifiant, polymère non vulcanisé de polyisobutylène (PIB), copolymère d'acétate de vinyle et d'éthylène non vulcanisé (EVA), copolymère d'acétate de polyvinyle et d'éthylène non vulcanisé et bitume (ECB) et polymère de polyéthylène chloré non vulcanisé et exempt de plastifiant (CPE).

5. Système selon la revendication 4, **caractérisé en ce que** la membrane comporte un tissé, une armature ou une couche de dos incorporé, à des fins de renfort ou pour améliorer l'adhérence d'une colle utilisée.

6. Système selon la revendication 5, **caractérisé en ce que** la matière du tissé, de l'armature ou de la couche de dos incorporé est sélectionné dans le groupe constitué du polyester, du polyamide et du voile de verre.

7. Système selon la revendication 1, **caractérisé en ce que** la membrane d'étanchéité souple (10) est une membrane bitumeuse.

8. Système selon la revendication 7, **caractérisée en ce que** la membrane bitumeuse comporte au moins une couche et est améliorée par addition de polypropylène atactique (APP) ou de styrène-butadiène-styrène (SBS).

9. Système selon la revendication 7, **caractérisé en ce que** la membrane bitumeuse comporte une armature sous forme d'un voile de verre ou de polyester ou sous forme d'une feuille d'aluminium.

10. Système selon la revendication 1, **caractérisé en ce que** la membrane d'étanchéité souple (10) comprend dans sa composition des composés sélectionnés parmi le groupe constitué des plastifiants, des pigments, des biocides, des retardateurs de flamme, des absorbants UV et des antioxydants.

11. Système selon la revendication 1, **caractérisé en ce que** la matière semi-conductrice des cellules photovoltaïques en film mince est sélectionnée parmi le groupe constitué du silicium amorphe, du silicium nanocristallin, avec ou sans addition de SiGe, du CdTe, du CdS, du GaAs, du CuInSe₂ (CIS) et du CuInₓGa₍₁₋ₓ₎Se₂ (CIGS).

12. Système selon la revendication 1, **caractérisé en ce que** le film mince semi-conducteur a été réalisé sur la membrane (10) par projection sous vide ou par impression au moyen d'un rouleau d'une encre contenant des nanoparticules de semi-conducteur.

13. Système selon la revendication 1, **caractérisé en ce que** le support sous-jacent sur lequel est fixée la membrane recouverte de cellules photovoltaïques (10) est sélectionné dans le groupe constitué d'un isolant (2B, 2C), d'un support en béton, d'une tôle ou d'un bac métallique (2A), d'une autre membrane d'étanchéité (1), d'une structure et/ou d'un panneau ou voligeage en bois naturel ou reconstitué (4, 5) et d'un assemblage quelconque de ces éléments.

14. Système selon la revendication 13, **caractérisé en ce que** la membrane recouverte de cellules photovoltaïques (10) est séparée du support sous-jacent par un géotextile d'interposition (6).

15. Système selon la revendication 13, **caractérisé en ce que** le support sous-jacent est muni de moyens de ventilation des cellules photovoltaïques.

16. Système selon la revendication 1, **caractérisé en ce que** le film mince de cellules semi-conductrices photovoltaïques déposé sur la membrane d'étanchéité (10) est recouvert d'une couche de protection vis-à-vis des intempéries.

17. Système selon la revendication 1, **caractérisé en ce que** les profilés (3) sont fixés à la membrane (10) par collage, soudage à froid, soudage à l'air chaud ou mécaniquement.

18. Système selon la revendication 1, **caractérisé en ce que** chaque profilé (3) d'une seule pièce en section transverse est formé d'une semelle (3A) et d'une âme saillante (3B) surmontée d'une partie ayant une section transverse de forme essentiellement triangulaire, carrée, ronde, cylindrique ou en flèche.

19. Bâtiment présentant un système de couverture de toiture selon l'une quelconque des revendications précédentes.
